# EUROPÄISCHE PATENTSCHRIFT

(11) **EP 2 051 031 B1**
(45) Veröffentlichungstag und Bekanntmachung des Hinweises auf die Patenterteilung: **25.05.2011**
(21) Anmeldenummer: 08017896.5
(22) Anmeldetag: 13.10.2008
(51) Int. Cl.: F28B 9/04, F28F 27/02, F28G 13/00, C02F 1/02, F01K 9/00, F28B 9/06

(54) **Kühlwassersystem für Kraftwerke und Industrieanlagen**
Cooling water system for power plants and industrial assemblies
Système d'eau de refroidissement pour centrale et installations industrielles

(30) Priorität: 19.10.2007 DE 102007050107
(43) Veröffentlichungstag der Anmeldung: 22.04.2009
(73) Patentinhaber: Envi Con & Plant Engineering GmbH, 90441 Nürnberg (DE)
(72) Erfinder: Maschke, Ulrich, Dipl. -Ing, 91341 Röttenbach (DE)
(74) Vertreter: Hübner, Gerd

(56) Entgegenhaltungen:
- EP-A- 1 127 846
- DE-A1- 19 960 037
- DE-B3-102005 029 988
- JP-A- 59 012 287
- US-A- 5 294 351
- UMWELTBUNDESAMT NATIONAL FOCAL POINT - IPPC: "Referenzdokument über die besten verfügbaren Techniken bei industriellen Kühlsystemen, Zusammenfassung in deutscher Übersetzung" INTEGRIERTE VERMEIDUNG UND VERMINDERUNG DER UMWELTVERSCHMUTZUNG (IVU), Dezember 2001 (2001-12), XP002514369 Umweltbundesamt

## Beschreibung

Die Erfindung betrifft ein Kühlwassersystem für Kraftwerke und Industrieanlagen umfassend mindestens zwei Kühlwasserstränge mit den im Oberbegriff des Patentanspruches 1 angegebenen Merkmalen.

Diese Merkmale beschreiben die üblichen, grundsätzlichen Anlagenkomponenten für die Kühlwasserversorgung von Großkraftwerken und Industrieanlagen. Derartige Kühlwassersysteme weisen in der Regel mindestens zwei Kühlwasserstränge auf. Jeder Strang umfasst einen von einem Kühlwasserreservoir - in der Regel einem Gewässer, wie einem Fluss, See oder dem Meer - gespeisten Kühlwassereinlass zu einer Kühlwasservorlaufleitung, eine dem Kühlwassereinlauf nachgeschaltete mechanische Reinigungseinrichtung in der Kühlwasservorlaufleitung, eine der Reinigungseinrichtung nachgeschaltete Kühlwasserpumpe in der Kühlwasservorlaufleitung, eine der Reinigungseinrichtung nachgeschaltete Wärmetauschereinrichtung und eine der Wärmetauschereinrichtung nachgeschaltete Kühlwasserrücklaufleitung, die zu einem Kühlwasserauslass in das in der Regel gleiche Kühlwasserreservoir führt.

Zum Hintergrund der Erfindung ist nun festzuhalten, dass Kühlwassersysteme beispielsweise von thermischen Kraftwerken aufgrund ihrer Temperaturbedingungen für Muscheln einen idealen Lebensraum darstellen. Eine Muschelbildung im Kühlwassersystem führt jedoch zu einer Beeinträchtigung der Leistungsdaten und zu Langzeitschäden. Aus diesem Grunde ist die Ansiedlung von Muscheln im Kühlwassersystem zu unterbinden, wofür es grundsätzlich zwei Ansatzpunkte gibt. Der erste Weg zur Muschelbekämpfung liegt in der anlagentechnisch praktisch keinen Mehraufwand hervorrufenden Biozidbehandlung des Kühlwassersystems mit relativ kostengünstigem Chlor oder anderen muscheltötenden Stoffen, wie dies beispielsweise aus der EP 1 127 846 A1 bekannt ist. Problem dabei ist die damit verbundene Einleitung von dünn-konzentrierten Chemikalien in das natürliche Kühlwasserreservoir, was aus Umwelt- und Naturschutzgründen in der Regel nur noch bedingt genehmigungsfähig ist.

Eine "saubere" Lösung stellt gegenüber der zweite Ansatzpunkt zur Muschelbekämpfung dar, nämlich die sogenannte Thermoschock-Methode, bei der das Kühlwassersystem mit Wasser auf einem thermischen Niveau oberhalb der Letaltemperatur der Muscheln beaufschlagt wird. Für ausgewachsene Exemplare der Muschelspezies Mytilis edulis beispielsweise beträgt die Letaltemperatur 44,3° Celsius, für deren Larven 41° Celsius. Derartige Techniken sind grundsätzlich in der DE 199 60 037 A1 oder der DE 10 2005 029 988 B3 offenbart, sowie in der US 5 294 351 A1, welche den Oberbegriff des Anspruchs 1 zeigt.

Da im Kühlwassersystem üblicherweise eine deutlich geringere Temperatur in Betrieb herrscht, wurde die Thermoschock-Behandlung bisher - wenn überhaupt - mit aufwändigen anlagentechnischen Maßnahmen zur Bildung eines Kurzschlusskreises im Kühlwassersystem realisiert. Dazu wurden zusätzliche Kurzschlussleitungen und Bypässe in das Kühlwassersystem eingebaut, was wiederum zu Kühlwasserrücklaufleitungen mit größeren Durchmessern führte. Ferner konnte der Kraftwerksbetrieb während der ein bis mehrere Stunden dauernden Thermoschock-Behandlung aufgrund ihrer speziellen Fahrweise nur mit erheblich eingeschränkter Leistung aufrechterhalten werden.

Ausgehend von dieser geschilderten Problematik liegt der Erfindung die Aufgabe zugrunde, eine Thermoschock-Behandlung des Kühlwassersystems mit einfacheren anlagentechnischen Mitteln und keinen nennenswerten Leistungseinbußen im Kraftwerksbetrieb während ihrer Durchführung zu ermöglichen.

Diese Aufgabe wird durch die im Kennzeichnungsteil des Patentanspruches 1 angegebene Auslegung des Kühlwassersystems und einen damit verbundenen Betriebszustand gelöst. Demnach sind vorgesehen
- mindestens ein selektiv aktivierbares Rücklauf-Absperrorgan im Kühlwasserrücklauf,
- eine vor dem mindestens einen Absperrorgan angeordnete Rücklauf-Verbindung zwischen den beiden Kühlwassenücklaufleitungen,
- eine vor der Reinigungseinrichtung angeordnete Vorlauf-Verbindung zwischen den mindestens zwei Kühlwasservorlaufleitungen, und
- einen Betriebszustand zur Thermoschock-Behandlung des Kühlwassersystems, in dem bei geschlossenem Rücklauf über die Vorlauf-Verbindung bei Stilllegung einer der beiden Kühlwasserpumpen das Kühlwasser mittels der laufenden anderen Kühlwasserpumpe in einem geschlossenen Kurzschluss-Kreislauf im Kühlwassersystem mehrfach unter Erwärmung auf eine Thermoschock-Behandlungstemperatur durch die Wärmetauschereinrichtungen rückwärts durch eine der Kühlwasservorlaufleitungen förderbar ist

Die erfindungsgemäße Anlage kommt mit zwei relativ kurzen Verbindungsleitungen, nämlich der Rücklauf-Verbindungsleitung zwischen den beiden Kühlwasserrücklaufleitungen und der Vorlauf-Verbindung zwischen den beiden Kühlwasservorlaufleitungen der beiden Kühlwasserstränge aus. Da letztere in aller Regel in relativ enger Nachbarschaft verlaufen, können diese Verbindungsleitungen kurz bleiben oder gar durch einen Schieber zwischen zwei benachbarten Leitungskammern unmittelbar gebildet sein. Zur Realisierung des Kurzschlusses innerhalb des Kühlwassersystems sind dann nur noch einige wenige rücklauf- und vorlaufseitige Absperrorgane notwendig.

Mit besonderem Vorteil verwendet das erfindungsgemäße Kühlwassersystem also die ohnehin vorhandenen Kühlwasserleitungen zur Bildung des Kurzschluss-Kreislaufes, so dass gesonderte Kurzschlussleitungen entfallen können. Zur Umwälzung des im kurzgeschlossenen Kühlwassersystems umlaufenden und damit in der Wärmetauschereinrichtung sich über die Letaltemperatur der Muscheln erwärmenden Kühlwassers wird die Kühlwasserpumpe eines der beiden Stränge benutzt, wogegen die andere Kühlwasserpumpe stillgelegt und in Gegenrichtung durchströmt oder durch einen kurzen Bypass umgangen wird. Mit Hilfe dieses technischen Kunstgriffes wird der geschlossene Kurzschluss-Kreislauf innerhalb des Systems ohne zusätzliche Kurzschlussicitungen ermöglicht.

Bevorzugte Ausführungsformen der Erfindung ergeben sich aus den abhängigen Ansprüchen, deren Merkmale, Einzelheiten und Vorteile der nachfolgenden Beschreibung von Ausführungsbeispielen anhand der beigefügten Zeichnungen entnehmbar sind. Es zeigen:

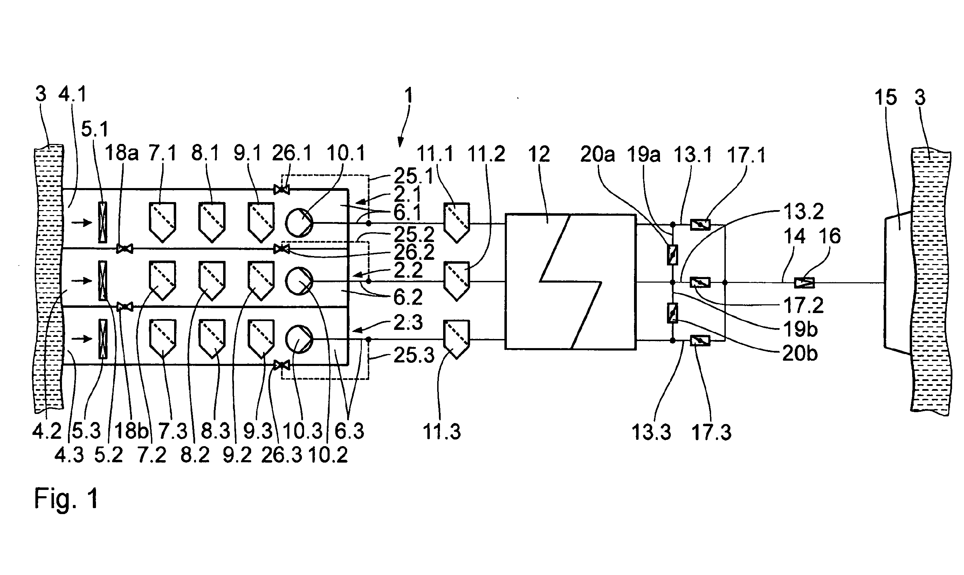

- Fig. 1 bis 5: schematische Schaltbilder von Kühlwassersystemen in unterschiedlichen Ausführungsformen.

Das in Fig. 1 dargestellte, als Ganzes mit 1 bezeichnete Kühlwassersystem dient grundsätzlich zur Kondensation des im Primärkreislauf eines thermischen Kraftwerkes durch Erhitzen des Speisewassers erzeugten Prozessdampfes. Die entsprechenden Komponenten des Primärkreislaufes sind aus Gründen der Übersichtlichkeit und da sie ferner für die Erfindung nicht relevant sind, nicht dargestellt.

Das Kühlwassersystem 1 in der gezeigten Konfiguration besteht aus drei Strängen 2.1, 2.2, 2.3, von denen im Folgenden der Strang 2.1 näher erläutert wird. Dessen Komponenten tragen Bezugsziffern mit dem Anhang ".1". Die anderen Stränge sind - sofern nicht anderweitig erörtert - identisch aufgebaut Übereinstimmende Komponenten darin sind mit entsprechenden Bezugsziffern und der Ergänzung ".2" bzw. ".3" in der Zeichnung versehen.

Das Kühlwassersystem 1 wird von einem Kühlwasserreservoir wie dem Meer 3 über einen Kühlwassereinlass 4.1 gespeist. Dieser ist mit Hilfe einer Dammtafel 5.1 beispielsweise im Falle von Hochwasser verschließbar. Vom Kühlwassereinlass 4.1 führt die Kühlwasservorlaufleitung 6.1 ab, in der in Strömungsrichtung aufeinanderfolgend ein mechanisch gereinigter Rechen 7.1 zur Grobabscheidung von Fremdkörpern, ein umlaufender Rechen 8.1 und eine Feinfilterung in Form eines Siebbandes 9.1, einer sogenannten Multidisc oder eines ähnlichen Abscheidegerätes angeordnet sind. Das so aufbereitete Kühlwasser gelangt im Strang 2.1 dann zu der Kühlwasserpumpe 10.1 in der Kühlwasservorlaufleitung 6.1, mit deren Hilfe das Kühlwasser durch einen Muschelfilter 11.1 in die entsprechende Wasserkammer dieses Strangs 2.1 des mit drei getrennten Wasserkammern für jeden Strang 2,1, 2.2, 2.3 ausgerüsteten Turbinenkondensators 12 gepumpt wird. Vom Turbinenkondensator 12 geht die Kühlwasserrücklaufleitung 13.1 ab, die sich mit den Rücklaufleitungen 13.2, 13.3 der beiden anderen Stränge 2.2, 2.3 zu einer Sammel-Rücklaufleitung 14 größeren Durchmessers vereint. Daran schließt sich der Kühlwasserauslass 15 an, über den das Kühlwasser - gereinigt durch ein Sieb 16 - wieder in das Meer 3 gelangt.

Zur Beeinflussung der Kühlwasserströme sind in den Strängen 2.1, 2.2, 2.3 verschiedene Absperrorgane eingebaut, die über eine nicht näher dargestellte Steuerung des Kühlwassersystems selektiv aktivierbar, also zu öffnen und zu schließen sind. Im Einzelnen ist in jeder Kühlwasserrücklaufleitung 13.1, 13.2, 13.3 eine Klappe 17.1,17.2,17.3 eingebaut Einlaufseitig ist zwischen den Kühlwasservorlaufleitungen 6.1, 6.2 einerseits und 6.2, 6.3 andererseits jeweils ein Schieber 18a, 18b angeordnet, die unmittelbar eine Fluidverbindung zwischen den einzelnen Strängen 2.1 und 2.2 bzw. 2.2 und 2.3 bilden und über die in noch näher zu erläuternder Weise Kühlwasser von einem Strang zum anderen Strang geführt werden kann.

Nach dem Turbinenkondensator 12 und vor den Klappen 17.1, 17.2, 17.3 sind die Stränge 2.1 und 2.2 einerseits sowie 2.2 und 2.3 andererseits mit einer Rücklauf-Verbindungsleitung 19a, 19b miteinander fluidtechnisch verbunden. In beiden Verbindungsleitungen 19a, 19b ist jeweils wiederum eine Klappe 20a, 20b eingebaut, um die Verbindungsleitungen 19a, 19b selektiv zu öffnen und zu schließen.

Im Normalbetrieb des Kühlwassersystems 1 sind die beiden Schieber 18a, 18b sowie die Klappen 20a, 20b geschlossen und die Klappen 17.1, 17.2, 17.3 geöffnet. Alle drei Kühlwasserpumpen 10.1,10.2,10.3 laufen, dementsprechend wird das Kühlwasser vom Meer 3 über die Vorlaufleitungen 6.1, 6.2, 6.3 durch den Turbinenkondensator 12, die Rücklaufleitungen 13.1, 13.2, 13.3 und die Sammel-Rücklaufleitung 14 wieder zurück in das Meer 3 gepumpt

Eine Thermoschock-Behandlung des Kühlwassersystems 1 wird immer paarweise entweder für die Stränge 2.1 und 2.2 oder 2.2 und 2.3 durchgeführt. Im Folgenden wird die Thermoschock-Behandlung für die Stränge 2.1, 2.2 ausführlich erläutert. Es bleiben dabei der Schieber 18b und die Klappe 20b geschlossen, die Kühlwasserpumpe 10.3 im Strang 2.3 läuft weiter, so dass durch diesen Strang 2.3 der Kühlwasserfluss über die Vorlaufleitung 6.3 durch die entsprechende Wasserkammer des Turbinenkondensators 12 und die Rücklaufleitung 13.3 aufrechterhalten bleibt.

Für die Wärmebehandlung wird die Klappe 17.1 geschlossen, die Klappe 20a wird (oder bleibt) geöffnet und das Kühlwasser aus dem Strang 2.1 fließt über die Rücklaufleitung 13.2 des Stranges 2.2 in die Sammel-Rücklaufleitung 14.

Als nächster Schritt wird die Kühlwasserpumpe 10.2 ausgeschaltet und die Klappe 17.2 geschlossen. Gleichzeitig wird der Schieber 18a geöffnet. Somit kann das Kühlwasser von der Pumpe 10.1 gefördert aus dem Strang 2.1 über die Verbindungsleitung 19a in die Rücklaufleitung 13.2 zurück über den Turbinenkondensator 12, die Vorlaufleitung 6.2 und den Schieber 18a rückwärts im Strang 2.2 gefördert werden. Damit wird ein geschlossener Kurzschluss-Kreislauf mit einem Kühlwassertransport in Normalrichtung im Strang 2.1 und in "Rückwärtsrichtung" im Strang 2.2 erzeugt, wobei durch den Mehrfachdurchlauf des Kühlwassers durch den Turbinenkondensator 12 eine starke Erhöhung der Kühlwassertemperatur hervorgerufen wird. Dies bewirkt die Thermoschock-Behandlung des Systems, somit kann wirkungsvoll einem Muschelbefall im Kühlwassersystem vorgebeugt werden.

Zur Überführung des Kühlwassersystems in den Normalbetrieb wird die Klappe 17.1 wieder geöffnet, so dass das Kühlwasser aus dem Strang 2.1 wieder in die Rücklaufleitung 13.1 und Sammel-Rücklaufleitung 14 zum Kühlwasserauslass 15 fließen kann. Die Kühlwasserpumpe 10.2 im Strang 2.2 kann mit dem Öffnen der Klappe 17.2 wieder angefahren werden. Damit ist die Wärmebehandlung beendet. Es wird zwar noch ein "Propfen" heißen Kühlwassers durch das System geschoben, gleichzeitig wird jedoch schon wieder frisches Kühlwasser vom Meer 3 her herangeführt.

Eine Thermoschock-Behandlung des Paares aus Strang 2.2 und 2.3 wird entsprechend durch Schließen der Klappen 17.2,17.3, Öffnen der Klappe 20b und des Schiebers 18b sowie Stillstand der Pumpe 10.2 durchgeführt. In diesem Falle fließt das Kühlwasser in der Vorlaufleitung 6.3 und der Rücklaufleitung 13.3 in Normalrichtung und im Strang 2.2 über die Rücklaufleitung 13.2, den Turbinenkondensator 12 und die Vorlaufleitung 6.2 in "Rückwärtsrichtung" über den Schieber 18b in den Strang 2.3 zurück.

Für die vorstehende Thermoschock-Behandlung ist der Turbinenkondensator 12 im Übrigen so auszulegen, dass er auch bei der zu erreichenden Thermoschock-Behandlungstemperatur betreibbar ist. Ferner ist die Kühlwasserpumpe 10.2 des zentralen Stranges 2.2 dazu geeignet, einen Durchlauf des Kühlwassers gegen die normale Förderrichtung zu erlauben. Gegebenenfalls ist die Kühlwasserpumpe 10.2 durch eine (nicht näher dargestellte) Rücklaufsperre zu schützen. Alternativ dazu können die Pumpen 10.1,10.2 und 10.3 auch jeweils durch kurze, in Fig. 1 gestrichelt dargestellte Bypass-Leitungen 25.1, 25.2 und 25.3 geschützt werden. Letztere sind über Schieber 26.1, 26.2 und 26.3 durchlaufsteuerbar.

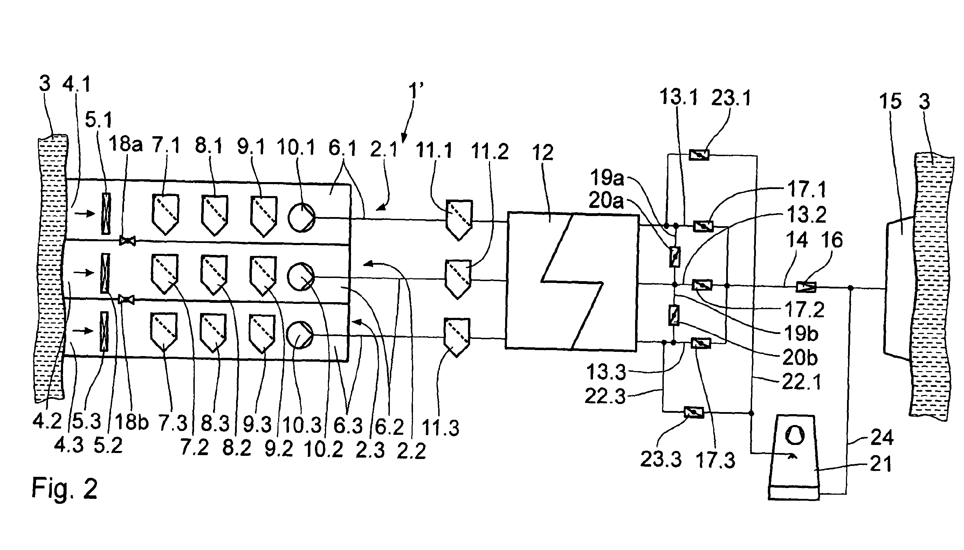

Im Hinblick auf die erhöhte Temperatur des Kühlwassers nach Durchführung einer Thermoschock-Behandlung kann es aus genehmigungstechnischen Gründen notwendig sein, das ablaufende Kühlwasser vor der Rückleitung in das Meer 3 abzukühlen. Hierfür ist das in Fig. 2 dargestellte Kühlwassersystem 1' vorgesehen, das sich von dem in Fig. 1 gezeigten Kühlwassersystem 1 lediglich auf der Rücklaufseite durch zusätzliche konstruktive Maßnahmen unterscheidet. Diese werden im Folgenden näher erläutert, Komponenten, die übereinstimmend in beiden Kühlwassersystemen 1, 1' vorhanden sind, sind mit identischen Bezugszeichen versehen und bedürfen keiner nochmaligen Erörterung. Diesbezüglich kann auf die Beschreibung der Fig. 1 verwiesen werden.

Die erwähnten zusätzlichen Komponenten im Kühlwassersystem 1' bestehen aus einem Ablaufkühlturm 21 als zusätzliche Ablaufkühleinrichtung, der über Kühlwasserablaufleitungen 22.1, 22.3 mit den KühlwasserRücklaufleitungen 13.1, 13.3 der beiden Stränge 2.1, 2.3 verbunden ist. Diese Kühlwasser-Ablaufleitungen 22.1, 22.3 zweigen vor den Klappen 17.1, 17.3 von diesen Rücklaufleitungen 13.1., 13.3 ab. Zur Steuerung des Kühlwasserflusses sind in den Ablaufleitungen 22.1, 22.3 jeweils weitere Klappen 23.1, 23.3 eingebaut.

Vom Ablaufkühlturm 21 führt eine Zusatzrücklaufleitung 24 zum Kühlwasserauslass 15 zurück. Bei einer Thermoschock-Behandlung der Stränge 2.1, 2.2 sind analog der Beschreibung zu Fig. 1 die Klappen 17.1, 17.2 und 20b sowie der Schieber 18b geschlossen, die Klappe 20a und der Schieber 18a sind geöffnet. Damit wird einerseits im Strang 2.3 der übliche Kühlwasserdurchlauf aufrechterhalten, wogegen in den Strängen 2.1, 2.2 der Kurzschluss-Kreislauf mit Hilfe der Kühlwasserpumpe 10.1 erzeugt wird.

Die beiden Klappen 23.1, 23.3 in den Zusatzleitungen 22.1, 22.3 zum Ablaufkühlturm 21 sind dabei ebenfalls noch geschlossen.

Mit Beendigung der Thermoschock-Behandlung wird im Gegensatz zur Ausführungsform gemäß Fig. 1 nicht die Klappe 17.1 als erster Schritt geöffnet, sondern die in der Ablaufleitung 22.1 angeordnete Ablaufklappe 23.1. Damit fließt das Kühlwasser nicht über die Rücklaufleitung 13.1 und Sammel-Rücklaufleitung 14 direkt in den Kühlwasserauslass 15, sondern zum Ablaufkühlturm 21, wo es auf eine genehmigungskonforme Auslasstemperatur gesenkt und über die Zusatzrücklaufleitung 24 zum Kühlwasserauslass 15 geführt wird. Sobald das komplette stark erwärmte Kühlwasser aus dem Kühlwassersystem entwichen ist, wird Letzteres analog der Fig. 1 in den normalen Betriebszustand zurückgeführt, wobei insbesondere die Ablaufklappe 23.1 wieder geschlossen wird.

Bei einer Thermoschock-Behandlung der Stränge 2.2, 2.3 wird entsprechend durch Öffnen der Zusatzleitung 22.3 mit Hilfe der Klappe 23.3 verfahren.

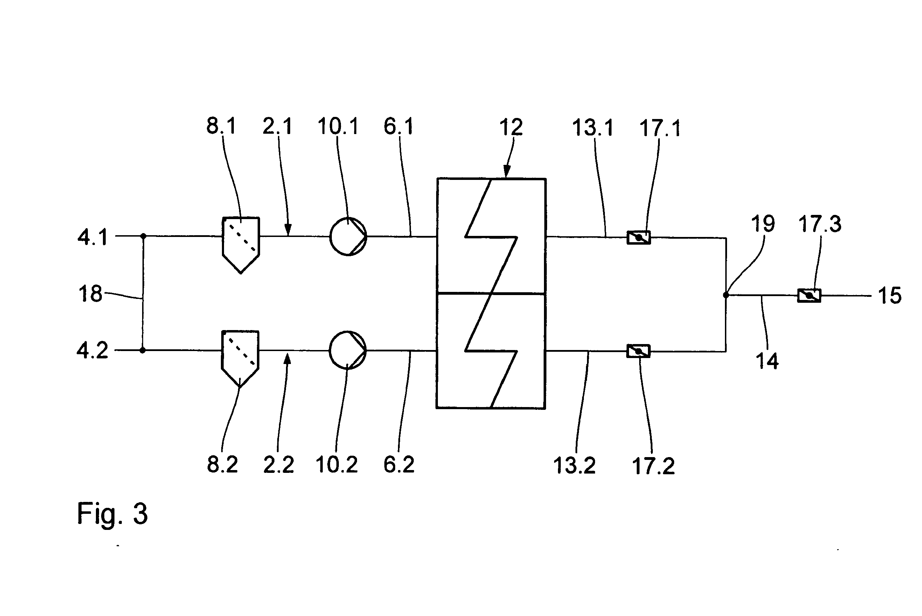

In den Fig. 3 bis 5 sind Zwei-Strang-Varianten eines Kühlwassersystems gezeigt, bei denen mit den Varianten gemäß Fig. 1 und 2 übereinstimmende Komponenten mit identischen Bezugszeichen versehen sind. Insoweit kann auf die dortige Beschreibung verwiesen werden.

Bei der in Fig. 3 gezeigten Ausführungsform sind zwei Kühlwasser-Stränge 2.1, 2.2 vorgesehen, deren Rücklaufleitungen 13.1. 13.2 sich zu einer Sammel-Rücklaufleitung 14 vereinigen. In allen drei Rücklaufleitungen 13.1, 13.2 und 14 sind jeweils Klappen 17.1,17.2,17.3 eingesetzt.

Für die Thermoschock-Behandlung wird die Sammel-Rücklaufleitung 14 mithilfe der Klappe 17.3 geschlossen, die beiden anderen Klappen 17.1,17.2 bleiben offen. Eine Pumpe 10.1 wird außer Betrieb gesetzt, sodass das Kühlwasser mithilfe der Pumpe 10.2 über den Wärmetauscher 12 in normaler Vorderrichtung durch die Rücklaufleitung 13.2 und in Rückrichtung über die Rücklaufleitung 13.1 durch die zweite Hälfte des Wärmetauschers 12, die stillgesetzte Pumpe 10.1 und die Vorlauf-Verbindung 18 im Kreislauf umgepumpt und das Kühlwasser entsprechend erwärmt wird. Nach Erreichen der vorgesehenen Thermoschock-Temperatur wird das Absperrorgan 17.3 der Sammel-Rücklaufleitung 14 geöffnet und gleichzeitig das Absperrorgan 17.1 der nicht in Betrieb befindlichen Pumpe 10.1 geschlossen. Damit ist der Strang 2.1 stillgelegt und bleibt solange außer Betrieb, bis das auf Thermoschock-Behandlungstemperatur erhitzte Wasser seine gewünschte Wirkung entfaltet hat. Anschließend wird der Normalbetrieb durch Öffnen der Klappe 17.1 und Starten der Pumpe 10.1 für den Strang 2.1 wieder initiiert.

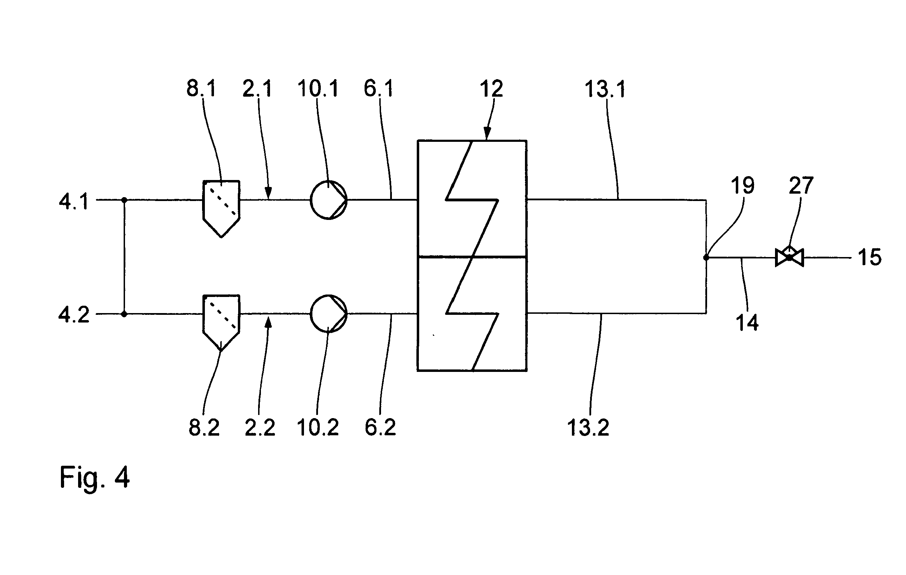

Die in Fig. 4 gezeigte Zwei-Strang-Variante unterscheidet sich von der gemäß Fig. 3 darin, dass lediglich in der Sammel-Rücklaufleitung 14 ein Regelventil 27 eingesetzt ist. Zur Erhitzung des Wassers wird dieses Regelventil 27 geschlossen und analog den Ausführungen zur Fig. 3 das Wasser in dem damit geschaffenen Kreislauf in den beiden Strängen 2.1, 2.2 umgepumpt, bis die Thermoschock-Behandlungstemperatur erreicht ist. Danach wird Kühlwasser über das Regelventil 27 in einer solchen Menge abgegeben, dass in dem Kühlwassersystem eine konstante, erhöhte Temperatur gehalten wird.

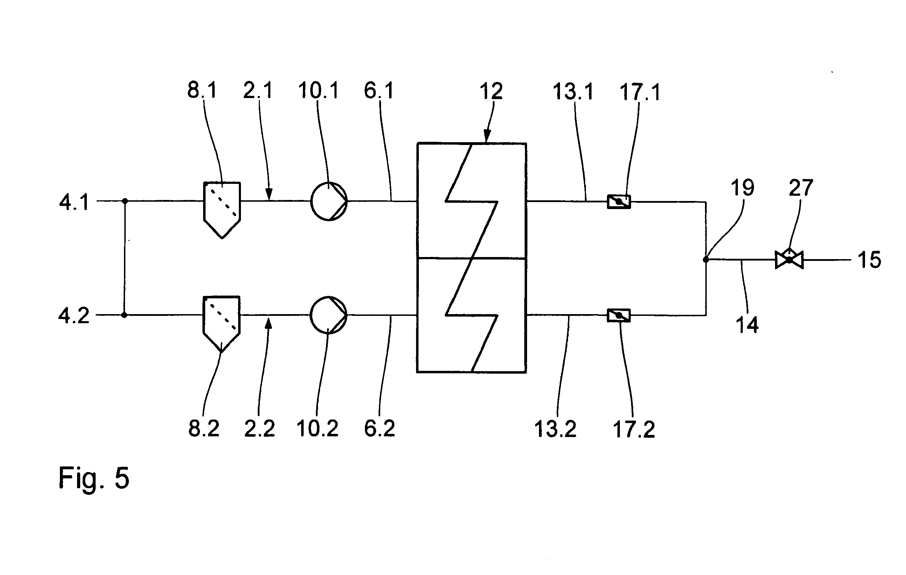

Die in Fig. 5 gezeigte Ausführungsform stellt eine Kombination der Varianten gemäß Fig. 3 und 4 dar, indem die Klappe 17.3 in der Rücklaufleitung 14 gemäß Fig. 3 durch das in Fig. 4 zeigte Regelventil 27 ersetzt wird.

Das Kühlwassersystem gemäß Fig. 5 kann in den beiden Betriebsweisen, wie sie anhand von Fig. 3 und 4 erläutert wurden, durch entsprechende Betätigung der Klappen 17.1,17.2 und des Regelventils 27 gefahren werden.

## Patentansprüche

1. Kühlwassersystem für Kraftwerke und Industrieanlagen mit mindestens zwei Kühlwassersträngen (2.1, 2.2, 2.3), in jedem Strang (2.1, 2.2, 2.3) umfassend
- einen von einem Kühlwasserreservoir, vorzugsweise einem Gewässer (3) gespeisten Kühlwassereinlass (4.1, 4.1, 4.2, 4.3) zu einer Kühlwassorvorlaufleitung (6.1, 6.2, 6.3),
- eine dem Kühlwassereinlass (4.1, 4.1, 4.2, 4.3) nachgeschaltete mechanische Reinigungseinrichtung (7.1, 7.2, 73; 8.1, 8.2, 8.3; 9.1, 9.2, 9.3) in der Kühlwasservorlaufleitung (6.1, 6.2, 6.3),
- eine der Reinigungseinrichtung (7.1, 7.2, 7.3; 8.1, 8.2, 8.3; 9.1, 9.2, 9.3) nachgeschaltete Kühlwasserpumpe (10.1, 10.2, 103) in der Kühlwasservorlaufleitung (6.1, 6.2, 6.3),
- eine der Kühlwasserpumpe (10.1, 10.2,103) nachgeschaltete Wärmetauschereinnchtung (12) am Ende der Kühlwasservorlaufleitung (6.1, 6.2, 6.3), und
- eine der Wärmetauschereinrichtung (12) nachgeschaltete Kühlwasserrücklaufleitung (13.1, 13.2, 13.3), die zu einem Kühlwasserauslass (15) in ein Kühlwasserreservoir (3) führt,
wobei das System **gekennzeichnet ist durch**
- mindestens ein selektiv aktivierbares Rücklauf-Absperrorgan (17.1, 17.2, 17.3) im Kühlwasserrücklauf,
- eine vor dem mindestens einen Absperrorganen (17.1, 17.2, 17.3) angeordnete Rücklauf-Verbindung (19, 19a, 19b) zwischen den mindestens zwei Kühlwasserrücklaufleitungen (13.1, 1.3.2, 13.3),
- eine vor der Reinigungseinrichtung (7.1, 72, 7.3; 8.1, 8.2, 8.3; 9.1, 9.2, 9.3) angeordnete Vorlauf-Verbindung zwischen den mindestens zwei Kühlwasservorlaufleitungen (6.1, 6.2, 6.3), und
- einen Betriebszustand zur Thermoschock-Behanlung des Kühlwassersystems (1, 1'), in dem bei geschlossenem Rücklauf-Absperrorgan (17.1, 17.2, 17.3) über die Vorlauf-Verbindung (18) bei Stilllegung einer der beiden Kühlwasserpumpen (10.2) das Kühlwasser mittels der laufenden anderen Kühlwasserpumpe (10.1) in einem geschlossenen Kurzschluss-Kreislauf im Kühlwassersystem (1,1') mehrfach unter Erwärmung auf eine Thermoschock-Behandlungstemperatur **durch** die Wärmetauschereinrichtungen (12) rückwärts **durch** eine der Kühlwasservorlaufleitungen (6.2) förderbar ist

2. Kühlwassersystem nach Anspruch 1, **dadurch gekennzeichnet,**
- **dass** selektiv aktivierbare Rücklauf-Absperrorgane (17.1, 17.2, 17.3) in den mindestens zwei Kühlwasserrücklaufleituhgen (13.1, 13.2, 13.3) angeordnet sind,
- **dass** vor den Absperrorganen (17.1, 17.2, 17.3) Rücklauf-Verbindungsleitungen (19, 19a, 19b) zwischen den beiden Kühlwasserrücklaufleitungen (13.1, 13.2, 13.3) angeordnet sind,
**dass** die Vorlauf-Verbindung über selektiv aktivierbare Vorlauf-Absperrorgane (18a, 18b) absperrbar ist, und
**dass** im Betriebszustand zur Thermoschock-Behandlung des Kühlwassersystems (1, 1') die Rücklauf Absperrorgane (17.1, 17.2, 17.3) geschlossen und eines der Vorlauf-Absperrorgane (18a, 18b) geöffnet sind.

3. Kühlwassersystem nach Anspruch 1 oder 2, **dadurch gekennzeichnet, dass** die Wärmetauschereinrichtungen in den Kühlwasserstrangen (2.1, 2.2, 2.3) durch einen gemeinsamen Wärmetauscher oder Turbineakondensator (12) mit getrennten Wasserkammern gebildet sind.

4. Kühlwassersystem nach Anspruch 1, 2 oder 3, **dadurch gekennzeichnet, dass** die im Betriebszustand der Thermoschock-Behandlung stillgelegte Kühlwasserpumpe (10.2) durch eine Rücklaufsperre oder eine Bypass-Leitung (25.1, 25.2, 25.3) geschützt ist.

5. Kühlwassersystem nach einem der vorgenannten Ansprüche, **dadurch gekennzeichnet, dass** an mindestens einer Rücklauffeitung (13.1,13.3) eine vor deren Rücklauf-Absperrorgan (17.1, 17.3) abzweigende Kühlwasserabflutleitung (22.1, 22.3) vorgesehen ist, die über eine Abflutkühleinrichtung (21) zum Kühlwasserauslass (15) führt.

6. Kühlwassersystem nach Anspruch 5, **dadurch gekennzeichnet, dass** in der Kühlwasserabflutleitung (22.1, 22.3) ein selektiv aktivierbarer Zusatz-Absperrorgan (23.1, 23.2) angeordnet ist

7. Kühlwassersystem nach einem der vorgenannten Ansprüche mit drei Kühlwassersträngen (2.1, 2.2, 2.3), **dadurch gekennzeichnet, dass** zwei der Kühlwasserstränge (2.1, 2.3) mit dem dritten Kühlwasserstrang (2.2) jeweils über eine Rücklauf-Verbindungsleitung (19a, 19b) und Vorlaufverbindung (18a, 18b) verbunden sind, in denen jeweils selektiv aktivierbare Rücklauf- und Verlauf-Absperrorgane (20a, 20b; 18a, 18b) angeordnet und derart ansteuerbar sind, dass ein geschlossener Kurzschluss-Kreislauf zur Thermeschock-Behandlung jeweils durch zwei paarweise zusammengeschaltete Kühlwasserstränge (2.1, 22) erzeugbar ist.

8. Kühlwassersystem nach einem der vorgenannten Ansprüche mit zwei Kühlwassersträngen (2.1, 2.2), **dadurch gekennzeichnet, dass** in jeder Kühlwasserrücklaufleitung (13.1, 13.2) und einer damit verbundenen Sammel-Rücklaufleitung (14) ein Absperrorgan (17.1, 17.2, 17.3) angeordnet ist

9. Kühlwassersystem nach einem der Ansprüche 1 bis 7 mit zwei Kühlwassersträngen (2.1, 2.2), **dadurch gekennzeichnet, dass** ein Regelventil (27) in einer Sammel-Rücklaufleitung (14) die Funktion der Absperrorgane (17.1, 17.2, 17.3) übernimmt und den Rücklauf zur Thermoschock Behandlung geregelt verschließt.

## Claims

1. Cooling water system for power plants and industrial assemblies comprising at least two cooling water lines (2.1, 2.2, 2.3), in each line (2.1, 2.2, 2.3) comprising
- a cooling water inlet (4.1, 4.1, 4.2, 4.3) which is supplied with water by a cooling water reservoir, preferably a body of water (3), and leads to a cooling water supply pipe (6.1, 6.2, 6.3);
- a mechanical cleaning device (7.1, 7.2, 7.3; 8.1, 8.2, 8.3; 9.1, 9.2, 9.3) which is arranged downstream of the cooling water inlet (4.1, 4.2, 4.3) in the cooling water supply pipe (6.1, 6.2, 6.3);
- a cooling water pump (10.1, 10.2, 10.3) in the cooling water supply pipe (6.1, 6.2, 6.3), the cooling water pump (10.1, 10.2, 10.3) being arranged downstream of the cleaning device (7.1, 7.2, 7.3; 8.1, 8.2, 8.3; 9.1, 9.2, 9.3);
- a heat exchanger device (12) at the end of the cooling water supply pipe (6.1, 6.2, 6.3), the heat exchanger device (12) being arranged downstream of the cooling water pump (10.1, 10.2, 10.3); and
- a cooling water return pipe (13.1, 13.2, 13.3) arranged downstream of the heat exchanger device (12), the cooling water return pipe (13.1, 13.2, 13.3) leading to a cooling water outlet (15) into a cooling water reservoir (3),
with the system being **characterized by**
- at least one selectively activatable return stop valve (17.1, 17.2, 17.3) in the cooling water return circuit;
- a return connection (19, 19a, 19b) between the at least two cooling water return pipes (13.1, 13.2, 13.3), the return connection (19, 19a, 19b) being arranged in front of the at least one stop valves (17.1, 17.2, 17.3);
- a supply connection between the at least two cooling water supply pipes (6.1, 6.2, 6.3), the supply connection being arranged in front of the cleaning device (7.1, 7.2, 7.3; 8.1, 8.2, 8.3; 9.1, 9.2, 9.3); and
- an operating state for thermal shock treatment of the cooling water system (1, 1') in which when the return stop valve (17.1, 17.2, 17.3) is closed and one of the two cooling water pumps (10.2) is being shut down, the cooling water is pumpable, via the supply connection (18), through the heat exchanger devices (12) multiple times and backwards through one of the cooling water supply pipes (6.2) in a closed bypass circulation in the cooling water system (1.1) by means of the other running cooling water pump (10.1) so that the cooling water is heated to a thermal shock treatment temperature.

2. Cooling water system according to claim 1, **characterized in**
- **that** selectively activatable return stop valves (17.1, 17.2, 17.3) are arranged in the at least two cooling water return pipes (13.1, 13.2, 13.3);
- **that** in front of the stop valves (17.1, 17.2, 17.3), return connection pipes (19, 19a, 19b) are arranged between the two cooling water return pipes (13.1, 13.2, 13.3);
- **that** the supply connection is closable via selectively activatable supply stop valves (18a, 18b); and
- **that** in the operating state for thermal shock treatment of the cooling water system (1, 1'), the return stop valves (17.1, 17.2, 17.3) are closed and one of the supply stop valves (18a, 18b) is open.

3. Cooling water system according to claim 1 or 2, **characterized in that** the heat exchanger devices in the cooling water lines (2.1, 2.2, 2.3) are formed by a common heat exchanger or turbine condenser (12) with separate water chambers.

4. Cooling water system according to claim 1, 2 or 3, **characterized in that** the cooling water pump (10.2), which was shut down in the operating state of thermal shock treatment, is protected by a non-return device or a bypass pipe (25.1, 25.2, 25.3).

5. Cooling water system according to one of the preceding claims, **characterized in that** at least one return pipe (13.1, 13.3) is provided with a cooling water outflow pipe (22.1, 22.3) which branches off in front of the return stop valve (17.1, 17.3) and leads to the cooling water outlet (15) via an outflow cooling device (21).

6. Cooling water system according to claim 5, **characterized in that** a selectively activatable additional stop valve (23.1, 23.2) is arranged in the cooling water outflow pipe (22.1, 22.3).

7. Cooling water system according to one of the preceding claims comprising three cooling water lines (2.1, 2.2, 2.3), **characterized in that** two of the cooling water lines (2.1, 2.3) are connected to the third cooling water line (2.2) via in each case one return connection pipe (19a, 19b) and supply connection (18a, 18b) in which in each case selectively activatable return and supply stop valves (20a, 20b; 18a, 18b) are arranged which are actuable in such a way that a closed bypass circuit for thermal shock treatment is formable by in each case two cooling water lines (2.1, 2.2) which are interconnected in pairs.

8. Cooling water system according to one of the preceding claims comprising two cooling water lines (2.1, 2.2), **characterized in that** a stop valve (17.1, 17.2, 17.3) is arranged in each cooling water return pipe (13.1, 13.2) and a collecting return pipe (14) which is connected therewith.

9. Cooling water system according to one of claims 1 to 7 comprising two cooling water lines (2.1, 2.2), **characterized in that** in a collecting return line (14), a control valve (27) takes over the function of the stop valves (17.1, 17.2, 17.3) and closes the return circuit towards the thermal shock treatment in a controlled manner.

## Revendications

1. Système d'eau de refroidissement pour centrales et installations industrielles avec au moins deux voies d'eau de refroidissement (2.1, 2.2, 2.3), comprenant dans chaque voie (2.1, 2.2, 2.3):
- une entrée d'eau de refroidissement (4.1, 4.1, 4.2, 4.3) alimentée par un réservoir d'eau de refroidissement, de préférence par des cours d'eau (3) vers une conduite montante d'eau de refroidissement (6.1, 6.2, 6.3),
- un dispositif de nettoyage (7.1, 7.2, 7.3 ; 8.1, 8.2, 8.3 ; 9.1, 9.2, 9.3) mécanique monté en aval de l'entrée d'eau de refroidissement (4.1, 4.1, 4.2, 4.3) dans la conduite montante d'eau de refroidissement (6.1, 6.2, 6.3),
- une pompe à eau de refroidissement (10.1, 10.2, 10.3) montée en aval du dispositif de nettoyage (7.1, 7.2, 7.3; 8.1, 8.2 ; 8.3 ; 9.1, 9.2, 9.3) dans la conduite montante d'eau de refroidissement (6.1, 6.2, 6.3),
- un dispositif d'échange de chaleur (12) monté en aval de la pompe à eau de refroidissement (10.1, 10.2, 10.3) à l'extrémité de la conduite montante d'eau de refroidissement (6.1, 6.2, 6.3) et
- une conduite descendante d'eau de refroidissement (13.1, 13.2, 13.3) montée en aval du dispositif d'échange de chaleur (12), qui mène à une sortie d'eau de refroidissement (15) dans un réservoir d'eau de refroidissement (3),
le système étant **caractérisé par**
- au moins un organe d'arrêt de conduite descendante (17.1, 17.2, 17.3) pouvant être activé de manière sélective dans la conduite descendante d'eau de refroidissement,
- une liaison de conduite descendante (19, 19a, 19b) disposée avant au moins un organe d'arrêt (17.1, 17.2, 17.3) entre au moins deux conduites descendantes d'eau de refroidissement (13.1, 13.2, 13.3),
- une liaison de conduite montante disposée avant le dispositif de nettoyage (7.1, 7.2, 7.3 ; 8.1, 8.2, 8.3 9.1, 9.2, 9.3) entre au moins deux conduites montantes d'eau de refroidissement (6.1, 6.2, 6.3), et
- un état opérationnel pour le traitement par choc thermique du système d'eau de refroidissement (1, 1'), dans lequel lorsque l'organe d'arrêt de conduite descendante (17.1, 17.2, 17.3) est fermé, l'eau de refroidissement peut être transportée vers l'arrière par l'une des conduites montantes d'eau de refroidissement (6.2) par l'intermédiaire de la liaison de conduite montante (18) en cas d'arrêt de l'une des deux pompes à eau de refroidissement (10.2) au moyen de l'autre pompe à eau de refroidissement (10.1) en marche dans un circuit court-circuité fermé dans le système d'eau de refroidissement (1, 1') à différentes reprises en chauffant à une température de traitement par choc thermique grâce aux dispositifs d'échange de chaleur (12).

2. Système d'eau de refroidissement selon la revendication 1, **caractérisé en ce que**
- des organes d'arrêt de conduite descendante (17.1, 17.2, 17.3) pouvant être activés de manière sélective sont disposés dans au moins deux conduites descendantes d'eau de refroidissement (13.1, 13.2, 13.3),
- des conduites de liaison de conduite descendante (19, 19a, 19b) sont disposées avant les organes d'arrêt (17.1, 17.2, 17.3) entre les deux conduites descendantes d'eau de refroidissement (13.1, 13.2, 13.3),
- la liaison de conduite montante peut être fermée par des organes d'arrêt de conduite montante (18a, 18b) pouvant être activés de manière sélective, et
- à l'état opérationnel pour le traitement par choc thermique du système d'eau de refroidissement (1, 1'), les organes d'arrêt de conduite descendante (17.1, 17.2, 17.3) sont fermés et l'un des organes d'arrêt de conduite montante (18a, 18b) est ouvert.

3. Système d'eau de refroidissement selon la revendication 1 ou 2, **caractérisé en ce que** les dispositifs d'échange de chaleur sont formés dans les voies d'eau de refroidissement (2.1, 2.2, 2.3) par un échangeur de chaleur ou condensateur de turbine commun (12) avec des chambres à eau séparées.

4. Système d'eau de refroidissement selon la revendication 1, 2 ou 3, **caractérisé en ce que** la pompe à eau de refroidissement (10.2) arrêtée à l'état opérationnel du traitement par choc thermique est protégée par un dispositif automatique de blocage ou une conduite de dérivation (25.1, 25.2, 25.3).

5. Système d'eau de refroidissement selon l'une quelconque des revendications précitées, **caractérisé en ce qu'**une conduite d'évacuation d'eau de refroidissement (22.1, 22.3) bifurquant avant son organe d'arrêt de conduite descendante (17.1, 17.3) est prévue sur au moins une conduite descendante (13.1, 13.3), laquelle mène via un dispositif de refroidissement d'évacuation (21) à la sortie d'eau de refroidissement (15).

6. Système d'eau de refroidissement selon la revendication 5, **caractérisé en ce qu'**un organe d'arrêt supplémentaire (23.1, 23.2) pouvant être activé de manière sélective est disposé dans la conduite d'évacuation d'eau de refroidissement (22.1, 22.3).

7. Système d'eau de refroidissement selon l'une quelconque des revendications précitées avec trois voies d'eau de refroidissement (2.1, 2.2, 2.3), **caractérisé en ce que** deux des voies d'eau de refroidissement (2.1, 2.3) sont reliées à la troisième voie d'eau de refroidissement (2.2) respectivement par une conduite de liaison de conduite descendante (19a, 19b) et une liaison de conduite montante (18a, 18b), dans lesquelles respectivement des organes d'arrêt de conduite descendante et de conduite montante (20a, 20b; 18a, 18b) pouvant être activés de manière sélective sont disposés et peuvent. être commandés de telle manière qu'un circuit court-circuité fermé puisse être généré pour le traitement par choc thermique respectivement par deux voies d'eau de refroidissement (2.1, 2.2) montées par paires.

8. Système d'eau de refroidissement selon l'une quelconque des revendications précitées avec deux-voies d'eau de refroidissement (2.1, 2.2), **caractérisé en ce qu'**un organe d'arrêt (17.1, 17.2, 17.3) est disposé dans chaque conduite descendante d'eau de refroidissement (13.1, 13.2) et une conduite descendante collectrice reliée à celle-ci (14).

9. Système d'eau de refroidissement selon l'une quelconque des revendications 1 à 7 avec deux voies d'eau de refroidissement (2.1, 2.2), **caractérisé en ce qu'**une soupape de régulation (27) dans une conduite descendante collectrice (14) assume la fonction des organes d'arrêt (17.1, 17.2, 17.3) et ferme par régulation le retour pour le traitement par choc thermique.
